# EUROPEAN PATENT SPECIFICATION

(11) **EP 2 858 424 B1**
(45) Date of publication and mention of the grant of the patent: **28.06.2017**
(21) Application number: 12878121.8
(22) Date of filing: 22.08.2012
(51) Int. Cl.: H04W 48/18

(54) **METHOD, DEVICE, AND TERMINAL FOR SELECTING PUBLIC LAND MOBILE NETWORK**
VERFAHREN, VORRICHTUNG UND ENDGERÄT ZUR AUSWAHL EINES ÖFFENTLICHEN MOBILEN TERRESTRISCHEN NETZES
PROCÉDÉ, DISPOSITIF ET TERMINAL POUR LA SÉLECTION D'UN RÉSEAU MOBILE TERRESTRE PUBLIC

(30) Priority: 28.05.2012 CN 201210168998
(43) Date of publication of application: 08.04.2015
(73) Proprietor: ZTE Corporation, Shenzhen, Guangdong 518057 (CN)
(72) Inventor: ZHANG, Na, Shenzhen Guangdong 518057 (CN)
(74) Representative: Brevalex
(86) International application number: PCT/CN2012/080465
(87) International publication number: WO 2013/177867

(56) References cited:
- CN-A- 101 321 110
- CN-A- 101 895 966
- CN-A- 101 932 084
- CN-A- 102 197 684
- CN-A- 102 422 680
- US-A1- 2008 311 912
- US-A1- 2010 195 643

## Description

### TECHNICAL FIELD

The disclosure relates to the technical field of communications, and more particularly to a method, device and terminal for selecting a Public Land Mobile Network (PLMN).

### BACKGROUND

With the development of wireless data service technology, new operators are constantly emerging, and established operators are also gradually exploring the international market; but each operator always establishes only a new generation communication network when entering an emerging market, and in this process, it is impossible to quickly achieve a 100% new network coverage for a specified area; these new and emerging operators often establish a communication network by themselves, and sign a roaming protocol with local service providers; thus, cooperation among these operators is continuously strengthened.

A network selecting technology is the key technology of User Equipment (UE), and a network selecting speed of the UE is the critical index to evaluate the performance of the UE. A network selecting method provided by a 3rd Generation Partnership Project (3GPP) standard protocol can not meet the requirement of users for quick network selection of the UE any more; the network selecting method provided by the 3GPP standard protocol is as follows:
No matter for automatic network selection or manual network selection, after being powered on, UE first attempts a Registered Public Land Mobile Network (RPLMN), if it is successful, there will be no following process, if it is not successful, the UE will generate a Public Land Mobile Network (PLMN) list; wherein the PLMN list is as follows:
   (1) Home Public Land Mobile Network (HPLMN);
   (2) User Controlled Public Land Mobile Network (UPLMN) (which is the PLMN in the User Controlled PLMN Selector with Access Technology recorded in the Universal Subscriber Identity Module (USIM) file in the UE; these PLMNs are arranged according to priority in the USIM);
   (3) Operator Controlled Public Land Mobile Network (OPLMN) (which is the PLMN in the Operator Controlled PLMN Selector with Access Technology recorded in the USIM file in the UE, these PLMNs are arranged according to priority in the USIM);
   (4) PLMNs with relatively good signal quality, which are arranged randomly;
   (5) other PLMNs, which are arranged in descending order of signal quality;
the UE searches according to the above PLMN list one by one and attempts to register.

According to the 3GPP standard protocol, when the UE automatically selects a network, the Universal Mobile Telecommunications System (UMTS, also called 3GSM) and the Global System for Mobile Communications (GSM) are two different wireless access technologies; during selection of the PLMN, it is needed to indicate the preferential wireless access technology; if it is not indicated, the GSM/Enhanced Data Rate for GSM Evolution (EDGE) Radio Access Network (GERAN) is a default selection.

The above network selecting method at least has the following problems:
(1) the wireless access technology is stored in a Subscriber Identity Module (SIM) card of a user, and the SIM card can not be modified after being issued to the user, therefore a wireless access technology expected by the user can not be implemented; for example, the user hopes that 3G is the preferential technology, but the SIM card indicates that the preferential access technology is 2G; at this point, the network selecting method provided by the 3GPP standard protocol is still accessing a network by 2G, which causes poor user experience;
(2) it is unable to select a network or the speed of selecting a network is slow; especially a part of the new network operators allow only one wireless access technology at present, but for the network selecting method provided by the 3GPP standard protocol, other wireless access technologies may be the default technologies, thereby causing a long time for selecting a network and poor user experience;
(3) the current Forbidden Public Land Mobile Network (FPLMN) list can not differentiate the wireless access technologies; once a certain PLMN is added into an FPLMN list, all the wireless access technologies of the PLMN can not be used; for applications which have signed a roaming protocol with other wireless access technologies of the PLMN, the PLMN mechanism can not be used either, which causes poor user experience.

To sum up, it is urgent for those skilled in the field to present a new method for selecting a PLMN to solve the disadvantages of the network selecting method provided by the current 3GPP standard protocol.

US 2010/0195643 discusses a domain specific PLMN selection.

### SUMMARY

For solving the problem that a wireless access technology expected by a user can not be implemented due to use of a network selecting method provided by a current 3GPP standard protocol, the disclosure provides a method, device and terminal for selecting a PLMN.

A method for selecting a PLMN is provided, as recited in claim 1.

A device for selecting a PLMN is provided, as recited in claim 6.

A terminal for selecting a PLMN is provided, as recited in claim 11.

In the device and terminal for selecting a PLMN provided by the disclosure, both the wireless access technology module and the list module may be configured by a user, so that the user can perform the optimum configuration as needed to implement quick network selection; since it requires to first determine a wireless access technology, the cooperated operator supporting only one wireless access technology can be selected as soon as possible under the wireless access technology supported by itself; the PLMN which is listed in an FPLMN list is no longer forbidden completely, it is listed as an FPLMN only under a certain wireless access technology, but it may be selected through other wireless access technologies; thus, through implementation of the disclosure, the problem that a wireless access technology expected by a user can not be implemented due to use of a network selecting method provided by a current 3GPP standard protocol can be better solved, and the user experience is enhanced.

### BRIEF DESCRIPTION OF THE DRAWINGS

Fig. 1 is a structure diagram of a terminal for selecting a PLMN provided by the disclosure;
Fig. 2 is a structure diagram of a device for selecting a PLMN provided by the disclosure;
Fig. 3 is a diagram of a wireless access technology module in a device for selecting a PLMN provided by the disclosure;
Fig. 4 is a flowchart of a method for selecting a PLMN provided by the disclosure;
Fig. 5 is a flowchart of determining a wireless access technology in a method for selecting a PLMN provided by the disclosure;
Fig. 6 is a flowchart of determining a wireless access technology list in a method for selecting a PLMN provided by the disclosure;
Fig. 7 is a flowchart of a network selecting method provided by a current 3GPP standard protocol; and
Fig. 8 is a flowchart of a specific implementation mode of a method for selecting a PLMN provided by the disclosure.

### DETAILED DESCRIPTION

The disclosure is further elaborated below through specific implementation modes and in combination with the accompanying drawings.

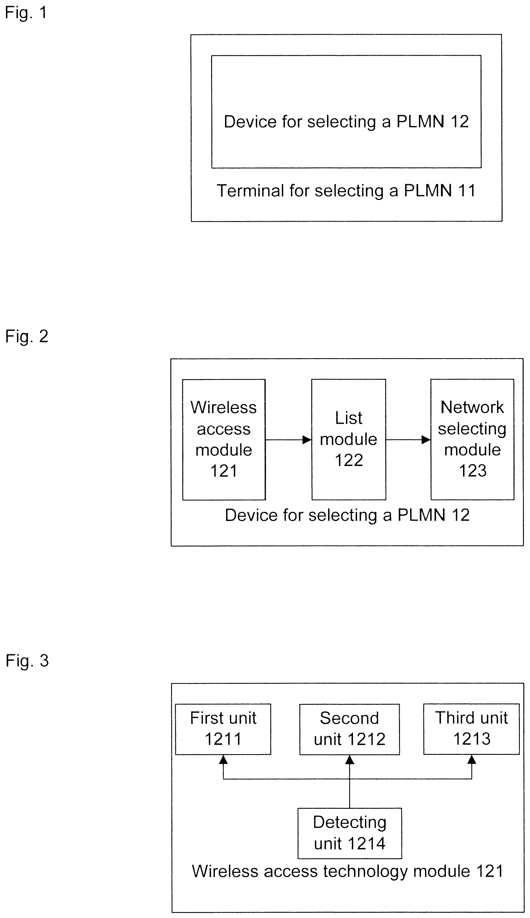

Fig. 1 is a structure diagram of a terminal for selecting a PLMN 11 provided by the disclosure.

It can be seen from Fig. 1 that in an implementation mode, the terminal for selecting a PLMN 11 provided by the disclosure includes a device for selecting a PLMN 12; the terminal for selecting a PLMN 11 uses the device for selecting a PLMN 12 to search and select a PLMN;
the terminal for selecting a PLMN 11 implements the following functions: the device for selecting a PLMN 12 acquires and stores a wireless access technology set by an owner of the terminal for selecting a PLMN 11, a wireless access technology when the terminal for selecting a PLMN 11 registered with a PLMN most recently, and a wireless access technology supported by the terminal for selecting a PLMN 11;
the device for selecting a PLMN 12 selects a wireless access technology as the wireless access technology when the terminal for selecting a PLMN 11 registers with a PLMN;
the device for selecting a PLMN 12 generates a PLMN list according to the selected wireless access technology;
the device for selecting a PLMN 12 searches and selects a PLMN according to the PLMN list.

Fig. 2 is a structure diagram of the device for selecting a PLMN 12 in the terminal for selecting a PLMN 11 as shown in Fig. 1.

It can be seen from Fig. 2 that in an implementation mode, the device for selecting a PLMN 12 provided by the disclosure includes a wireless access technology module 121, a list module 122 and a network selecting module 123;
the wireless access technology module 121 is connected with the list module 122, and is configured to detect and store a wireless access technology for accessing a PLMN which is supported by the terminal for selecting a PLMN 11, and select a wireless access technology when accessing to a PLMN and transmit the selected wireless access technology to the list module 122;
the list module 122 is connected with the network selecting module 123, and is configured to generate a PLMN list according to the wireless access technology selected by the wireless access technology module 121, and transmit the PLMN list to the network selecting module 123; and
the network selecting module 123 is configured to search and select a PLMN according to the PLMN list.

Fig. 3 is a diagram of the wireless access technology module 121 in the device for selecting a PLMN 12 shown in Fig. 2.

It can be seen from Fig. 3 that in an implementation mode, the wireless access technology module 121 provided by the disclosure includes a first unit 1211, a second unit 1212, a third unit 1213 and a detecting unit 1214;
the first unit 1211 is configured to store the wireless access technology selected by a user of the terminal for selecting a PLMN 11;
the second unit 1212 is configured to store the wireless access technology when the terminal for selecting a PLMN 11 successfully registered with a PLMN most recently;
the third unit 1213 is configured to store all the other wireless access technologies supported by the terminal for selecting a PLMN 11 except the wireless access technologies stored by the first unit 1211 and the second unit 1212; and
the detecting unit 1214 is configured to detect whether the first unit 1211 stores a wireless access technology; if the first unit 1211 stores a wireless access technology, then the detecting unit 1214 selects the wireless access technology stored by the first unit 1211 as the wireless access technology for the terminal for selecting a PLMN 11 to access a PLMN; if the first unit 1211 does not store a wireless access technology, then the detecting unit 1214 detects whether the second unit 1212 stores a wireless access technology; if the second unit 1212 stores a wireless access technology, then the detecting unit 1214 selects the wireless access technology stored by the second unit 1212 as the wireless access technology for the terminal for selecting a PLMN 11 to access a PLMN; the detecting unit 1214 is further configured to, when both the first unit 1211 and the second unit 1212 do not store a wireless access technology, select the wireless access technology stored by the third unit 1213 as the wireless access technology for the terminal for selecting a PLMN 11 to access a PLMN.

In an embodiment, the third unit 1213 in above embodiment includes a list subunit which is configured to arrange the wireless access technologies stored by the third unit in order of GERAN, UMTS and LTE to generate a wireless access technology list; the detecting unit 1214 is further configured to select, according to the wireless access technology list generated by the list subunit, the wireless access technologies supported by the terminal for selecting a PLMN 11 in order as the wireless access technology for the terminal for selecting a PLMN 11 to access a PLMN.

In an embodiment, the list subunit in above embodiment is characterised in that the wireless access technology list is automatically generated and adjusted, and is adapted automatically with change of user settings or network environment; when the wireless access technologies in the first unit 1211 and the second unit 1212 are used, the wireless access technology in the third unit 1213 is released.

In an embodiment, the list module 122 in above embodiment is configured to detect all the available PLMNs conforming to the wireless access technology, and arrange all the detected available PLMNs according to a preset rule to generate a PLMN list.

In an embodiment, the preset rule in above embodiment is: arranging all the available PLMNs in order of RPLMN, HPLMN, OPLMN and UPLMN; the other PLMNs are arranged in order; when there are multiple other PLMNs, they are arranged in descending order of signal intensity; if there are multiple UPLMNs and OPLMNs, they are arranged according to priority; when there are multiple PLMNs with equivalent signal intensity, they are arranged according to priority.

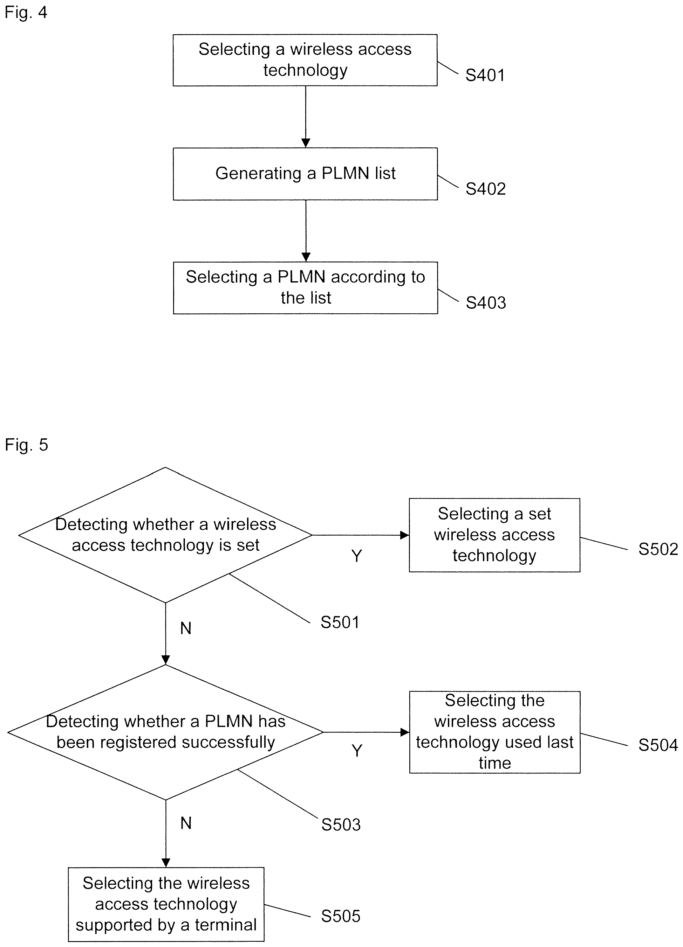

Fig. 4 is a flowchart of a method for selecting a PLMN by the terminal for selecting a PLMN 11 shown in Fig. 1.

It can be seen from Fig. 4 that a specific implementation mode of the method for selecting a PLMN provided by the disclosure includes the following steps:
S401: selecting a wireless access technology when accessing a PLMN;
S402: generating a PLMN list according to the wireless access technology; and
S403: searching and selecting a PLMN according to the PLMN list.

Fig. 5 is a flowchart of determining a wireless access technology in the method for selecting a PLMN shown in Fig. 4.

It can be seen from Fig .5 that the process of determining a wireless access technology when accessing a PLMN in above implementation mode includes the following steps:
S501: detecting whether a user of the terminal for selecting a PLMN 11 has set a preferred wireless access technology for the terminal for selecting a PLMN 11 to access a PLMN; if a preferred wireless access technology has been set, executing S502; if not, executing S503;
S502: selecting the wireless access technology preset by the user of the terminal for selecting a PLMN 11 as the wireless access technology for accessing a PLMN;
S503: further detecting whether the terminal for selecting a PLMN 11 has registered with a PLMN successfully; if successfully, executing S504; if not, executing S505;
S504: selecting the wireless access technology when the terminal for selecting a PLMN 11 last registered with a PLMN successfully as the wireless access technology for accessing a PLMN; and
S505: selecting the wireless access technology supported by the terminal for selecting a PLMN 11 as the wireless access technology for accessing a PLMN.

The process of determining the wireless access technology when the terminal for selecting a PLMN 11 accesses a PLMN may also be: first generating a wireless access technology list when the terminal for selecting a PLMN 11 accesses a PLMN, and then selecting the wireless access technology when the terminal for selecting a PLMN 11 accesses a PLMN according to the wireless access technology list.

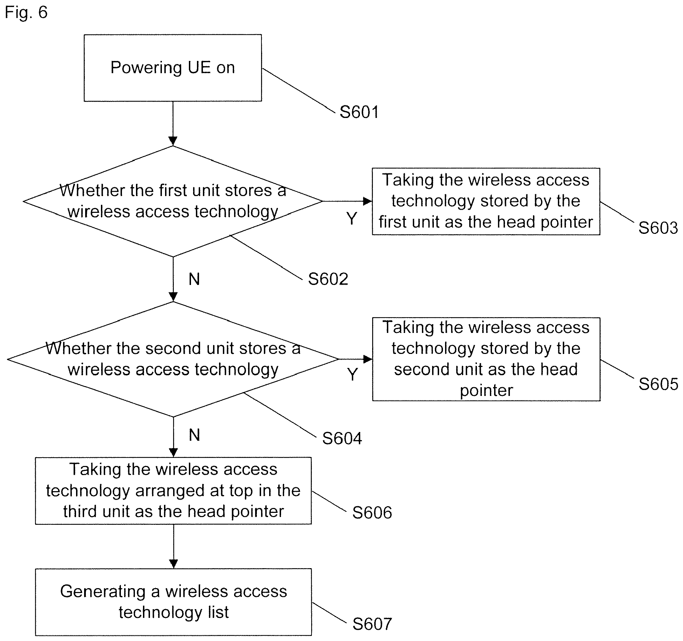

Fig. 6 is a flowchart of generating a wireless access technology list in the process of determining the wireless access technology shown in Fig. 5.

As shown in Fig. 6, in an embodiment, the method of generating a wireless access technology list when the terminal for selecting a PLMN 11 accesses a PLMN includes the following steps:
S601: powering the terminal for selecting a PLMN 11 on;
S602: detecting whether the first unit 1211 stores the wireless access technology set by the user of the terminal for selecting a PLMN 11;
S603: if the first unit 1211 stores the wireless access technology set by the user of the terminal for selecting a PLMN 11, then setting the wireless access technology stored by the first unit 1211 as the head pointer of the wireless access technology list, and releasing the same wireless access technology in the second unit and the third unit;
S604: if the first unit 1211 does not store the wireless access technology, then detecting whether the second unit 1212 stores the wireless access technology when the terminal for selecting a PLMN 11 successfully registered with a PLMN most recently;
S605: if the second unit 1212 stores the wireless access technology, then setting the wireless access technology stored by the second unit 1212 as the head pointer of the wireless access technology list, and releasing the same wireless access technology in the third unit;
S606: if the second unit 1212 does not store the wireless access technology, then setting the wireless access technology arranged at the top of the wireless access technologies stored by the third unit 1213 as the head pointer of the wireless access technology list; and
S607: setting the wireless access technology arranged at the end of the wireless access technologies stored by the third unit 1213 as the tail pointer of the wireless access technology list; and generating the wireless access technology list when the terminal for selecting a PLMN 11 accesses a PLMN; this wireless access technology list is similar to a linked list, attempting network selection in order from the head pointer to the tail pointer.

In an embodiment, in the method for selecting a PLMN of above embodiment, if the user of the terminal for selecting a PLMN 11 did not set a wireless access technology, and the terminal for selecting a PLMN 11 did not register with a PLMN successfully, all the wireless access technologies supported by the terminal for selecting a PLMN 11 are arranged in order of GERAN, UMTS and LTE to generate a wireless access technology list, and all the wireless access technologies supported by the terminal for selecting a PLMN 11 are selected in order as the wireless access technology when the terminal for selecting a PLMN 11 searches a PLMN.

In an embodiment, in the method for selecting a PLMN shown in Fig. 4, generating a PLMN list according to the wireless access technology includes the following steps:
according to the selected wireless access technology, the terminal for selecting a PLMN 11 detects all the available PLMNs conforming to the selected wireless access technology; and
arranging all the detected available PLMNs according to a preset rule to generate a PLMN list.

In an embodiment, the preset rule in the above method for selecting a PLMN is: arranging all the available PLMNs in order of RPLMN, HPLMN, OPLMN, UPLMN, PLMN with better signal intensity and PLMN with other signal intensity; when there are multiple other PLMNs, they are arranged in descending order of signal intensity; if there are multiple UPLMNs and OPLMNs, they are arranged according to priority; when there are multiple other PLMNs with equivalent signal intensity, they are arranged according to priority.

The disclosure is further elaborated below in combination with actual situation; a network selecting method in the prior art and a network selecting method provided by the disclosure are compared intuitively, so as to show the beneficial technical effects of the disclosure compared with the prior art.

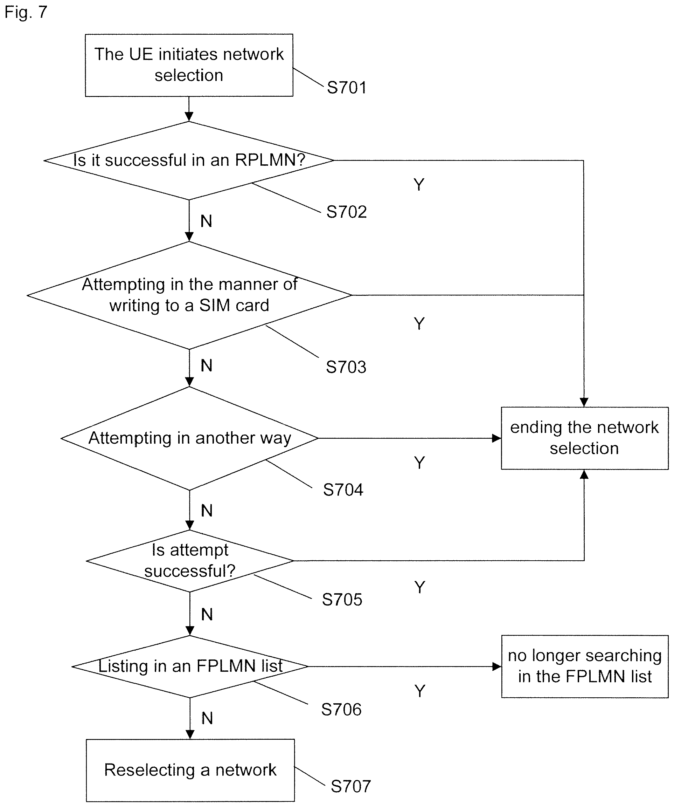

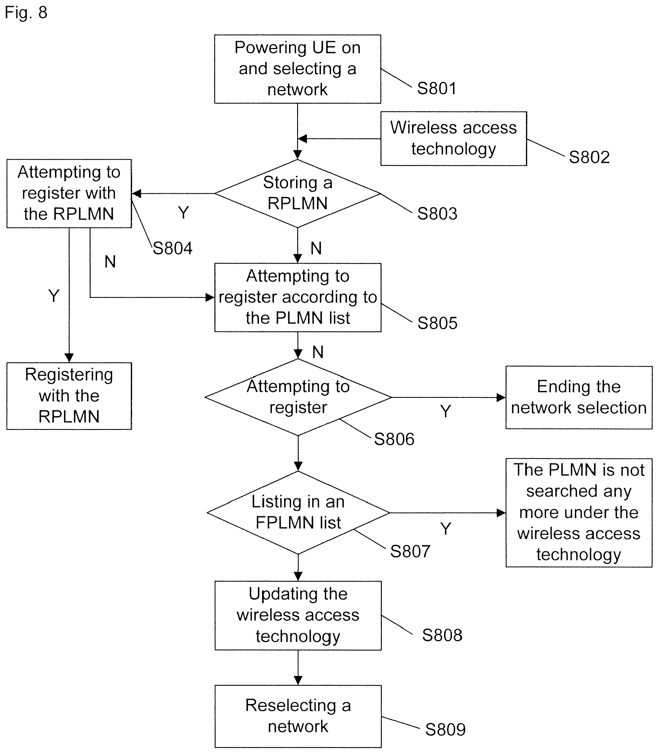

Fig. 7 is a flowchart of a network selecting method provided by a current 3GPP standard protocol; Fig. 8 is a flowchart of a specific implementation mode of a method for selecting a PLMN provided by the disclosure.

It can be seen from Fig. 7 that the network selecting method provided by the current 3GPP standard protocol includes the following steps:
S701: powering UE on;
S702: determining whether an RPLMN is stored; if it is stored and attempt is successful, then ending the process of network selection;
S703: if it is not stored, then searching the first PLMN according to priority, and searching first according to the wireless access technology written to the SIM card; if the first PLMN is found, then ending the process of network selection;
S704: if the first PLMN is not found, then searching the PLMN according to the other wireless access technologies; if search is successful, the ending the process of network selection;
S705: if search is not successful, then searching the next PLMN in the same way until attempting all the PLMNs;
S706: if network selection is rejected, then determining whether to list the PLMN in the FPLMN list; if the PLMN is listed in the FPLMN list, then not automatically searching for this PLMN any more; and
S707: if this PLMN is not listed in the PLMN list, then initiating a flow of network reselection by the UE; the process of network selection is time-consuming, besides, after a certain PLMN is added into the FPLMN list, it can not be searched any more.

It can be seen from Fig. 8 that a specific implementation mode of the method for selecting a PLMN provided by the disclosure includes the following steps:
S801: initiating a flow of selecting a network by the terminal for selecting a PLMN 11 according to network environment and state;
S802: under control of the wireless access technology module, selecting a wireless access technology and an order for accessing a PLMN;
S803: based on the current wireless access technology, detecting whether an RPLMN is stored;
S804: if stored, then attempting the RPLMN by the terminal for selecting a PLMN 11; if it is successful, then ending the process of network selection;
S805: if not stored, attempting to register according to the PLMN list;
S806: attempting the first PLMN, namely the HPLMN, in the PLMN list under the current wireless access technology; if it is successful, then ending the process of network selection;
S807: if it is unsuccessful, determining whether to list this PLMN in the FPLMN list, and attempting to search the next PLMN in the PLMN list under the current wireless access technology;
S808: if an available PLMN under the current wireless access technology can not be founded all the time, then updating the wireless access technology module, moving the pointer of the wireless access technology module to point to the next wireless access technology;
S808: repeating S803 to S807 according to the new selected wireless access technology, until network selection is successful; and
S809: if a network can not be found all the time, restarting the network selecting steps S801 to S808, until network selection is successful.

In the present implementation method, if a certain PLMN is listed in the FPLMN list, it just means that the PLMN will not be automatically searched any more after it is listed in the FPLMN list under the wireless access technology; the PLMN under other wireless access technologies can still be an Available Public Land Mobile Network (APLMN).

In conclusion, through implementation of the disclosure, there are at least the following beneficial effects:
1) network selection is performed by a user-defined wireless access technology, which enhances the user experience; and there is no need to write a wireless access technology to an SIM card any more, which reduces production cost of the SIM card;
2) for the cooperated operators, if one operator has only one wireless access technology, then it hopes to find a network under its own wireless access technology, and the disclosure can make it be found as soon as possible;
3) the PLMN which is listed in the FPLMN list is no longer forbidden completely, it is listed as an FPLMN only under a certain wireless access technology, and may be found under other access technologies, which is very significant for the cooperated operators; and
4) both the wireless access technology module and the PLMN module may be configured by a user, so that the user may perform the optimum configuration as needed to implement quick network selection.

The above is only the specific implementation mode of the disclosure and not intended to limit any form of the disclosure, any simple modification, equivalent variation or supplement performed to the above implementation modes according to the technical essence of the disclosure falling within the scope of the claims.

## Claims

1. A method for selecting a Public Land Mobile Network, PLMN, comprising:
selecting (S401) a wireless access technology for accessing a PLMN;
generating (S402) a PLMN list according to the wireless access technology; and
searching (S403) and selecting a PLMN according to the PLMN list;
**characterized in that** searching and selecting a PLMN according to the PLMN list comprises:
based on a current wireless access technology, detecting (S803) whether a Registered Public Land Mobile Network, RPLMN, is stored;
if not stored, attempting (S805) to register according to the PLMN list;
attempting (S806) the first PLMN in the PLMN list under the current wireless access technology;
if it is unsuccessful, determining (S807) whether to list this PLMN in a Forbidden Public Land Mobile Network, FPLMN, list under the current wireless access technology and attempting to search the next PLMN in the PLMN list under the current wireless access technology;
if an available PLMN under the current wireless access technology cannot be found all the time, then updating (S808) a wireless access technology module, and moving a pointer of the wireless access technology module to point to the next wireless access technology;
repeating (S808) the steps of detecting (S803), attempting (S805), attempting (S806) and determining (S807) under the next wireless access technology.

2. The method for selecting a PLMN according to claim 1, wherein the process of selecting (S401) a wireless access technology for accessing a PLMN comprises:
detecting whether a user has set a wireless access technology; if the user has set a wireless access technology, then selecting the wireless access technology set by the user as the wireless access technology for accessing a PLMN; if the user has not set a wireless access technology, then detecting whether a terminal has registered with a PLMN successfully; and
if the terminal has registered with a PLMN, then selecting a wireless access technology when the terminal last registered with the PLMN successfully as the wireless access technology for accessing a PLMN; if a terminal has not registered with a PLMN, then selecting a wireless access technology supported by the terminal as the wireless access technology for accessing a PLMN.

3. The method for selecting a PLMN according to claim 2, wherein the process of selecting (S401) a wireless access technology supported by the terminal as the wireless access technology for accessing a PLMN comprises:
arranging one or more wireless access technologies supported by the terminal in order of Global System for Mobile Communications, GSM/Enhanced Data Rate for GSM Evolution, EDGE, Radio Access Network, GERAN, Universal Mobile Telecommunications system, UMTS, and Long Term Evolution, LTE, to generate a wireless access technology list; and
selecting a wireless access technology from the one or more wireless access technologies supported by the terminal in order according to the wireless access technology list as the wireless access technology for accessing a PLMN.

4. The method for selecting a PLMN according to any one of claims 1 to 3, wherein the process of generating (S402) a PLMN list according to the wireless access technology comprises:
detecting all available PLMNs conforming to the wireless access technology; and
arranging all the detected available PLMNs according to a preset rule to generate the PLMN list.

5. The method for selecting a PLMN according to claim 4, wherein the preset rule is: arranging all the available PLMNs in order of Registered PLMN, RPLMN, Home PLMN, HPLMN, User Controlled PLMN, UPLMN, and Operator Controlled PLMN, OPLMN.

6. A device for selecting a Public Land Mobile Network, PLMN" comprising a wireless access technology module, a list module and a network selecting module; wherein
the wireless access technology module (121) is connected with the list module, and is configured to detect and store one or more wireless access technologies for accessing a PLMN which is or are supported by a terminal, and select a wireless access technology for accessing a PLMN and transmit the wireless access technology to the list module;
the list module (122) is connected with the network selecting module, and is configured to generate a PLMN list according to the wireless access technology selected by the wireless access technology module, and transmit the PLMN list to the network selecting module; and
the network selecting module (123) is configured to search and select a PLMN according to the PLMN list;
**characterized in that** the network selecting module is further configured to perform steps comprising:
based on a current wireless access technology, detecting (S803) whether a Registered Public Land Mobile Network, RPLMN, is stored;
if not stored, attempting (S805) to register according to the PLMN list;
attempting (S806) the first PLMN in the PLMN list under the current wireless access technology;
if it is unsuccessful, determining (S807) whether to list this PLMN in a Forbidden Public Land Mobile Network, FPLMN, list under the current wireless access technology and attempting to search the next PLMN in the PLMN list under the current wireless access technology;
if an available PLMN under the current wireless access technology cannot be found all the time, then updating (S808) a wireless access technology module, and moving a pointer of the wireless access technology module to point to the next wireless access technology;
repeating (S808) the steps of detecting (S803), attempting (S805), attempting (S806) and determining (S807) under the next wireless access technology.

7. The device for selecting a PLMN according to claim 6, wherein the wireless access technology module (121) comprises a first unit (1211) which is configured to store the wireless access technology selected by a user, a second unit (1212) which is configured to store a wireless access technology when the terminal last registered with a PLMN successfully, a third unit (1211) which is configured to store the one or more wireless access technologies supported by the terminal, and a detecting unit (1214);
the detecting unit (1214) is configured to detect whether the first unit (1211) stores a wireless access technology; and, if the first unit (1211) stores a wireless access technology, to select the wireless access technology stored by the first unit as the wireless access technology for accessing a PLMN; and, if the first unit (1211) does not store a wireless access technology, to detect whether the second unit stores a wireless access technology; and, if the second unit (1212) stores a wireless access technology, to select the wireless access technology stored by the second unit (1212) as the wireless access technology for accessing a PLMN; the detecting unit (1214) is further configured to, when both the first unit (1211) and the second unit (1212) do not store a wireless access technology, select a wireless access technology from the one or more wireless access technologies stored by the third unit (1213) as the wireless access technology for accessing a PLMN.

8. The device for selecting a PLMN according to claim 7, wherein the third unit (1213) comprises a list subunit which is configured to arrange the one or more wireless access technologies stored by the third unit in order of Global System for Mobile Communications, GSM/Enhanced Data Rate for GSM Evolution, EDGE, Radio Access Network, GERAN, Universal Mobile Telecommunications system, UMTS, and Long Term Evolution, LTE, to generate a wireless access technology list;
the detecting unit (1214) is further configured to select, according to the wireless access technology list, the one or more wireless access technologies supported by the terminal in order as the wireless access technology for accessing a PLMN.

9. The device for selecting a PLMN according to any one of claims 6 to 8, wherein the list module (1211) is configured to detect all available PLMNs conforming to the wireless access technology, and arrange all the detected available PLMNs according to a preset rule to generate the PLMN list.

10. The device for selecting a PLMN according to claim 9, wherein the preset rule is: arranging all the available PLMNs in order of Registered PLMN, RPLMN, Home PLMN, HPLMN, User Controlled PLMN, UPLMN, and Operator Controlled PLMN Selector with Access Technology, OPLMN.

11. A terminal for selecting a Public Land Mobile Network, PLMN, **characterized in that** the terminal comprises the device for selecting a PLMN according to any one of claims 6 to 10; the terminal for selecting a PLMN being adapted to use the device for selecting a PLMN to search, select and register with a PLMN.

## Patentansprüche

1. Verfahren zum Auswählen eines öffentlichen terrestrischen Mobilfunknetzes, PLMN, umfassend:
Auswählen (S401) einer drahtlosen Zugangstechnologie zum Zugreifen auf ein PLMN;
Erzeugen (S402) einer PLMN-Liste entsprechend der drahtlosen Zugangstechnologie; und
Suchen (S403) und Auswählen eines PLMN entsprechend der PLMN-Liste;
**dadurch gekennzeichnet, dass**
das Suchen und das Auswählen eines PLMN entsprechend der PLMN-Liste umfasst:
Erfassen (S803), ob ein registriertes öffentliches terrestrisches Mobilfunknetz, RPLMN, gespeichert ist, basierend auf einer gegenwärtigen drahtlosen Zugangstechnologie,
wenn nicht gespeichert, Versuchen (S805) einer Registrierung entsprechend der PLMN-Liste;
Versuchen (S806) des ersten PLMN in der PLMN-Liste unter der gegenwärtigen drahtlosen Zugangstechnologie;
ist dies erfolglos, Bestimmen (S807), ob dieses PLMN in einer verbotenen öffentlichen terrestrischen Mobilfunknetz, FPLMN, -Liste unter der gegenwärtigen drahtlosen Zugangstechnologie gelistet werden soll, und Versuchen das nächste PLMN in der PLMN-Liste unter der gegenwärtigen drahtlosen Zugangstechnologie zu suchen;
wenn ein verfügbares PLMN unter der gegenwärtigen drahtlosen Zugangstechnologie nicht zu jeder Zeit gefunden werden kann, dann Aktualisieren (S808) eines drahtlosen Zugangstechnologie-Modules, und
Bewegen eines Zeigers des drahtlosen Zugangstechnologie-Modules, um auf die nächste drahtlose Zugangstechnologie zu zeigen;
Wiederholen (S808) der Schritte des Erfassens (S803), des Versuchens (S805), des Versuchens (S806) und des Bestimmens (S807) unter der nächsten drahtlosen Zugangstechnologie.

2. Verfahren zum Auswählen eines PLMN nach Anspruch 1, wobei das Verfahren des Auswählens (S401) einer drahtlosen Zugangstechnologie zum Zugreifen auf ein PLMN umfasst:
Erfassen, ob ein Anwender eine drahtlose Zugangstechnologie eingerichtet hat; wenn der Anwender eine drahtlose Zugangstechnologie eingerichtet hat, dann Auswählen der durch den Anwender eingerichteten drahtlosen Zugangstechnologie als die drahtlose Zugangstechnologie zum Zugreifen auf ein PLMN; wenn der Anwender keine drahtlose Zugangstechnologie eingerichtet hat, dann Erfassen, ob ein Endgerät mit einem PLMN erfolgreich registriert wurde; und
wenn das Endgerät mit einem PLMN registriert wurde, dann Auswählen einer drahtlosen Zugangstechnologie als die drahtlose Zugangstechnologie zum Zugreifen auf ein PLMN, sofern es sich um das zuletzt erfolgreich mit dem PLMN registrierte Endgerät handelt; wenn ein Endgerät nicht mit einem PLMN registriert wurde, dann Auswählen einer durch das Endgerät unterstützten drahtlosen Zugangstechnologie als die drahtlose Zugangstechnologie zum Zugreifen auf ein PLMN.

3. Verfahren zum Auswählen eines PLMN nach Anspruch 2, wobei das Verfahren des Auswählens (S401) einer durch das Endgerät unterstützten drahtlosen Zugangstechnologie als die drahtlose Zugangstechnologie zum Zugreifen auf ein PLMN umfasst:
Arrangieren einer oder mehrerer durch das Endgerät unterstützten drahtlosen Zugangstechnologien in einer Reihenfolge Global System for Mobile Communications, GSM/Enhanced Data Rate for GSM Evolution, EDGE, Radio Access Network, GERAN, Universal Mobile Telecommunications System, UMTS, und Long Term Evolution, LTE, um eine drahtlose Zugangstechnologie-Liste zu erzeugen; und
Auswählen einer drahtlosen Zugangstechnologie von der einen oder den mehreren durch das Endgerät unterstützten drahtlosen Zugangstechnologien in einer Reihenfolge gemäß der drahtlosen Zugangstechnologie-Liste als die drahtlose Zugangstechnologie zum Zugreifen auf ein PLMN.

4. Verfahren zum Auswählen eines PLMN nach einem der Ansprüche 1 bis 3, wobei das Verfahren des Erzeugens (S402) einer PLMN-Liste entsprechend der drahtlosen Zugangstechnologie umfasst:
Erfassen aller verfügbaren PLMNs, welche mit der drahtlosen Zugangstechnologie übereinstimmen; und
Arrangieren all der erfassten, verfügbaren PLMNs entsprechend einer vorliegenden Regel zur Erzeugung der PLMN-Liste.

5. Verfahren zum Auswählen eines PLMN nach Anspruch 4, wobei die vorliegende Regel ist:
Arrangieren all der verfügbaren PLMNs in einer Reihenfolge registrierter PLMN, RPLMN, Heim-PLMN, HPLMN, anwendergeregelte/-gesteuerte PLMN, UPLMN, und betreibergeregelte/-gesteuerte PLMN, OPLMN.

6. Vorrichtung zum Auswählen eines öffentlichen terrestrischen Mobilfunknetzes, PLMN, umfassend ein drahtloses Zugangstechnologie-Modul, ein Listen-Modul und ein Netzwerkauswahl-Modul, wobei
das drahtlose Zugangstechnologie-Modul (121) mit dem Listen-Modul verbunden ist und zum Erfassen und Speichern einer oder mehrerer drahtloser Zugangstechnologien zum Zugreifen auf ein PLMN, welches durch ein Endgerät unterstützt ist/sind, und zum Auswählen einer drahtlosen Zugangstechnologie zum Zugreifen auf ein PLMN und zum Übertragen der drahtlosen Zugangstechnologie zu dem Listen-Modul eingerichtet ist;
das Listen-Modul (122) mit dem Netzwerkauswahl-Modul verbunden ist und zum Erzeugen einer PLMN-Liste gemäß der durch das drahtlose Zugangstechnologie-Modul ausgewählten drahtlosen Zugangstechnologie sowie zum Übertragen der PLMN-Liste zu dem Netzwerkauswahl-Modul eingerichtet ist; und
das Netzwerkauswahl-Modul (123) zum Suchen und Auswählen eines PLMN gemäß der PLMN-Liste eingerichtet ist;
**dadurch gekennzeichnet, dass**
das Netzwerkauswahl-Modul ferner zum Ausführen von Schritten eingerichtet ist, welche umfassen:
Erfassen (S803), ob ein registriertes öffentliches terrestrisches Mobilfunknetz, RPLMN, gespeichert ist, basierend auf einer gegenwärtigen drahtlosen Zugangstechnologie;
wenn nicht gespeichert, Versuchen (S805) einer Registrierung entsprechend der PLMN-Liste;
Versuchen (S806) des ersten PLMN in der PLMN-Liste unter der gegenwärtigen drahtlosen Zugangstechnologie;
ist dies erfolglos, Bestimmen (S807), ob dieses PLMN in einer verbotenen öffentlichen terrestrischen Mobilfunknetz, FPLMN, -Liste unter der gegenwärtigen drahtlosen Zugangstechnologie gelistet werden soll, und Versuchen das nächste PLMN in der PLMN-Liste unter der gegenwärtigen drahtlosen Zugangstechnologie zu suchen;
wenn ein verfügbares PLMN unter der gegenwärtigen drahtlosen Zugangstechnologie nicht zu jeder Zeit gefunden werden kann, dann Aktualisieren (S808) eines drahtlosen Zugangstechnologie-Modules, und
Bewegen eines Zeigers des drahtlosen Zugangstechnologie-Modules, um auf die nächste drahtlose Zugangstechnologie zu zeigen;
Wiederholen (S808) der Schritte des Erfassens (S803), des Versuchens (S805), des Versuchens (S806) und des Bestimmens (S807) unter der nächsten drahtlosen Zugangstechnologie.

7. Vorrichtung zum Auswählen eines PLMN nach Anspruch 6, wobei
das drahtlose Zugangstechnologie-Modul (121) eine erste Einheit (1211), welche zum Speichern der durch einen Anwender ausgewählten drahtlosen Zugangstechnologie eingerichtet ist, eine zweite Einheit (1212), welche zum Speichern einer drahtlosen Zugangstechnologie, sofern es sich um das zuletzt erfolgreich mit dem PLMN registrierte Endgerät handelt, eine dritte Einheit (1211), welche zum Speichern der einen oder der mehreren durch das Endgerät unterstützten drahtlosen Zugangstechnologien eingerichtet ist, und eine Erfassungseinheit (1214) umfasst;
die Erfassungseinheit (1214) zum Erfassen, ob die erste Einheit (1211) eine drahtlose Zugangstechnologie speichert, und,
wenn die erste Einheit (1211) eine drahtlose Zugangstechnologie speichert, zum Auswählen der durch die erste Einheit als die drahtlose Zugangstechnologie zum Zugreifen auf eine PLMN gespeicherte drahtlose Zugangstechnologie; und,
wenn die erste Einheit (1211) keine drahtlose Zugangstechnologie speichert, zum Erfassen, ob die zweite Einheit eine drahtlose Zugangstechnologie speichert; und,
wenn die zweite Einheit (1212) eine drahtlose Zugangstechnologie speichert, zum Auswählen der durch die zweite Einheit (1212) als die drahtlose Zugangstechnologie zum Zugreifen auf eine PLMN gespeicherte drahtlose Zugangstechnologie, eingerichtet ist;
die Erfassungseinheit (1214) ferner zum Auswählen einer drahtlosen Zugangstechnologie aus der einen oder den mehreren drahtlosen Zugangstechnologien eingerichtet ist, welche durch die dritte Einheit (1213) als die drahtlose Zugangstechnologie zum Zugreifen auf eine PLMN gespeichert ist/sind, wenn sowohl die erste Einheit (1211) als auch die zweite Einheit (1212) eine drahtlose Zugangstechnologie nicht speichern.

8. Vorrichtung zum Auswählen einer PLMN nach Anspruch 7, wobei die dritte Einheit (1213) eine Listen-Untereinheit umfasst, welche zum Arrangieren der einen oder der mehreren drahtlosen Zugangstechnologien eingerichtet ist, welche durch die dritte Einheit in einer Reihenfolge Global System for Mobile Communications, GSM/Enhanced Data Rate for GSM Evolution, EDGE, Radio Access Network, GERAN, Universal Mobile Telecommunications System, UMTS, und Long Term Evolution, LTE, gespeichert sind, um eine drahtlose Zugangstechnologie-Liste zu erzeugen;
die Erfassungseinheit (1214) ferner zum Auswählen der einen oder der mehreren durch das Endgerät unterstützten drahtlosen Zugangstechnologien, in Reihenfolge, gemäß der drahtlosen Zugangstechnologie-Liste als die drahtlose Zugangstechnologie zum Zugreifen auf ein PLMN eingerichtet ist.

9. Vorrichtung zum Auswählen eines PLMN nach einem der Ansprüche 6 bis 8, wobei das Listen-Modul (1211) zum Erfassen aller verfügbaren PLMNs, welche mit der drahtlosen Zugangstechnologie übereinstimmen, und zum Arrangieren all der erfassten, verfügbaren PLMNs gemäß einer vorliegenden Regel, um die PLMN-Liste zu erzeugen, eingerichtet ist.

10. Vorrichtung zum Auswählen eines PLMN nach Anspruch 9, wobei die vorliegende Regel ist:
Arrangieren all der verfügbaren PLMNs in einer Reihenfolge registrierter PLMN, RPLMN, Heim-PLMN, HPLMN, anwendergeregelte/-gesteuerte PLMN, UPLMN, und betreibergeregelte/-gesteuerte PLMN - Auswahleinheit mit Zugangstechnologie, OPLMN.

11. Endgerät zum Auswählen eines öffentlichen terrestrischen Mobilfunknetzes, PLMN, **dadurch gekennzeichnet, dass**
das Endgerät die Vorrichtung zum Auswählen eines PLMN nach einem der Ansprüche 6 bis 10 umfasst;
wobei das Endgerät zum Auswählen eines PLMN dazu eingerichtet ist, die Vorrichtung zum Auswählen eines PLMN zum Suchen und Auswählen eines PLMN sowie zum Registrieren bei einem PLMN zu verwenden.

## Revendications

1. Procédé pour la sélection d'un réseau mobile terrestre public, PLMN, comprenant :
la sélection (S401) d'une technologie d'accès sans fil pour accéder à un PLMN ;
la génération (S402) d'une liste de PLMNs en fonction de la technologie d'accès sans fil ; et
la recherche (S403) et la sélection d'un PLMN en fonction de la liste de PLMNs ;
**caractérisé en ce que** la recherche et la sélection d'un PLMN en fonction de la liste de PLMNs comprend :
sur la base d'une technologie d'accès sans fil actuelle, la détection (S803) si un réseau mobile terrestre public enregistré, RPLMN, est stocké ;
si aucun n'est stocké, la tentative (S805) pour s'enregistrer en fonction de la liste de PLMNs ;
la tentative (S806) du premier PLMN dans la liste de PLMN sous la technologie d'accès sans fil actuelle ;
si elle échoue, la détermination (S807) du fait de lister ce PLMN dans une liste de réseaux mobile terrestre public interdit, FPLMN, sous la technologie d'accès sans fil actuelle et la tentative de rechercher le PLMN suivant dans la liste de PLMN sous la technologie d'accès sans fil actuelle ;
si un PLMN disponible sous la technologie d'accès sans fil actuelle ne peut pas être trouvé en permanence, alors la mise à jour (S808) d'un module de technologie d'accès sans fil actuelle et le déplacement d'un pointeur du module de technologie d'accès sans fil pour pointer sur la technologie d'accès sans fil suivante ;
la répétition (S808) des étapes de détection (S803), de tentative (S805), de tentative (S806) et de détermination (S807) sous la technologie d'accès sans fil suivante.

2. Procédé pour la sélection d'un PLMN selon la revendication 1, dans lequel le processus de sélection (S401) d'une technologie d'accès sans fil pour accéder à un PLMN comprend :
la détection si un utilisateur a établi une technologie d'accès sans fil ; si l'utilisateur a établi une technologie d'accès sans fil, alors la sélection de la technologie d'accès sans fil établie par l'utilisateur comme la technologie d'accès sans fil pour accéder à un PLMN ; si l'utilisateur n'a pas encore établi une technologie d'accès sans fil, alors la détection du fait qu'un terminal s'est enregistré sur un PLMN avec succès ; et
si le terminal s'est enregistré sur un PLMN, alors la sélection d'une technologie d'accès sans fil quand le terminal s'est enregistré en dernier sur le PLMN avec succès comme la technologie d'accès sans fil pour accéder à un PLMN ; si un terminal ne s'est pas enregistré sur un PLMN, alors la sélection d'une technologie d'accès sans fil supportée par le terminal comme la technologie d'accès sans fil pour accéder à un PLMN.

3. Procédé pour la sélection d'un PLMN selon la revendication 2, dans lequel le processus de sélection (S401) d'une technologie d'accès sans fil supportée par le terminal comme la technologie d'accès sans fil pour accéder à un PLMN comprend :
l'agencement d'une ou plusieurs technologies d'accès sans fil supportées par le terminal par ordre de système mondial de communications mobiles, GSM/Evolution de débit de données amélioré pour GSM, EDGE, réseau d'accès radio, GERAN, système universel de télécommunications mobiles, UMTS, et évolution à long terme, LTE, pour générer une liste de technologies d'accès sans fil ; et
la sélection d'une technologie d'accès sans fil à partir des une ou plusieurs technologies d'accès sans fil supportées par le terminal dans l'ordre en fonction de la liste de technologies d'accès sans fil comme la technologie d'accès sans fil pour accéder à un PLMN.

4. Procédé pour la sélection d'un PLMN selon l'une quelconque des revendications 1 à 3, dans lequel le processus de génération (S402) d'une liste de PLMNs en fonction de la technologie d'accès sans fil comprend :
la détection de tous les PLMNs disponibles se conformant à la technologie d'accès sans fil ; et
l'agencement de tous les PLMNs disponibles détectés en fonction d'une règle prédéfinie pour générer la liste de PLMN.

5. Procédé pour la sélection d'un PLMN selon la revendication 4, dans lequel la règle prédéfinie est : l'agencement de tous les PLMNs disponibles par ordre de PLMN enregistré, RPLMN, PLMN de rattachement, HPLMN, PLMN contrôlé par l'utilisateur, UPLMN, et PLMN contrôlé par l'opérateur, OPLMN.

6. Dispositif pour la sélection d'un réseau mobile terrestre public, PLMN, comprenant un module de technologie d'accès sans fil, un module de liste et un module de sélection de réseau ; dans lequel
le module de technologie d'accès sans fil (121) est connecté au module de liste et est configuré pour détecter et stocker une ou plusieurs technologies d'accès sans fil pour accéder à un PLMN qui est ou sont supportés par un terminal, et sélectionner une technologie d'accès sans fil pour accéder à un PLMN et transmettre la technologie d'accès sans fil au module de liste ;
le module de liste (122) est connecté au module de sélection de réseau et est configuré pour générer une liste de PLMNs en fonction de la technologie d'accès sans fil sélectionnée par le module de technologie d'accès sans fil, et transmettre la liste de PLMNs au module de sélection de réseau ; et
le module de sélection de réseau (123) est configuré pour rechercher et sélectionner un PLMN en fonction de la liste de PLMNs ;
**caractérisé en ce que** le module de sélection de réseau est configuré en outre pour effectuer des étapes comprenant :
sur la base d'une technologie d'accès sans fil actuelle, la détection (S803) si un réseau mobile terrestre public enregistré, RPLMN, est stocké ;
si aucun n'est stocké, la tentative (S805) pour s'enregistrer en fonction de la liste de PLMNs ;
la tentative (S806) du premier PLMN dans la liste de PLMNs sous la technologie d'accès sans fil actuelle ;
si elle échoue, la détermination (S807) du fait de lister ce PLMN dans une liste de réseaux mobile terrestre public interdit, FPLMN, sous la technologie d'accès sans fil actuelle et la tentative de rechercher le PLMN suivant dans la liste de PLMNs sous la technologie d'accès sans fil actuelle ;
si un PLMN disponible sous la technologie d'accès sans fil actuelle ne peut pas être trouvé en permanence, alors la mise à jour (S808) d'un module de technologie d'accès sans fil et le déplacement d'un pointeur du module de technologie d'accès sans fil pour pointer sur la technologie d'accès sans fil suivante ;
la répétition (S808) des étapes de détection (S803), de tentative (S805), de tentative (S806) et de détermination (S807) sous la technologie d'accès sans fil suivante.

7. Dispositif pour la sélection d'un PLMN selon la revendication 6, dans lequel le module de technologie d'accès sans fil (121) comprend une première unité (1211) qui est configurée pour stocker une technologie d'accès sans fil sélectionnée par un utilisateur, une deuxième unité (1212) qui est configurée pour stocker une technologie d'accès sans fil quand le terminal s'est enregistré en dernier sur un PLMN avec succès, une troisième unité (1211) qui est configurée pour stocker l'une ou plusieurs technologies d'accès sans fil supportées par le terminal, et une unité de détection (1214) ;
l'unité de détection (1214) est configurée pour détecter si la première unité (1211) stocke une technologie d'accès sans fil ; et, si la première unité (1211) stocke une technologie d'accès sans fil, pour sélectionner la technologie d'accès sans fil stockée par la première unité comme la technologie d'accès sans fil pour accéder à un PLMN ; et, si la première unité (1211) ne stocke pas une technologie d'accès sans fil, pour détecter si la deuxième unité stocke une technologie d'accès sans fil ; et, si la deuxième unité (1212) stocke une technologie d'accès sans fil, pour sélectionner la technologie d'accès sans fil stockée par la deuxième unité (1212) comme la technologie d'accès sans fil pour accéder à un PLMN ; l'unité de détection (1214) est configurée en outre pour, quant à la fois la première unité (1211) et la deuxième unité (1212) ne stockent pas une technologie d'accès sans fil, sélectionner une technologie d'accès sans fil parmi les une ou plusieurs technologies d'accès sans fil stockées par la troisième unité (1213) comme la technologie d'accès sans fil pour accéder à un PLMN.

8. Dispositif pour la sélection d'un PLMN selon la revendication 7, dans lequel la troisième unité (1213) comprend une sous-unité de liste qui est configurée pour agencer les une ou plusieurs technologies d'accès sans fil stockées par la troisième unité par ordre de système mondial de communications mobiles, GSM/Evolution de débit de données amélioré pour GSM, EDGE, réseau d'accès radio, GERAN, système universel de télécommunications mobiles, UMTS, et évolution à long terme, LTE, pour générer une liste de technologies d'accès sans fil ;
l'unité de détection (1214) est configurée en outre pour sélectionner, en fonction de la liste de technologies d'accès sans fil, les une ou plusieurs technologies d'accès sans fil supportées par le terminal dans l'ordre comme la technologie d'accès sans fil pour accéder à un PLMN.

9. Dispositif pour la sélection d'un PLMN selon l'une quelconque des revendications 6 à 8, dans lequel le module de liste (1211) est configuré pour détecter tous les PLMN disponibles se conformant à la technologie d'accès sans fil, et agencer tous les PLMN disponibles détectés en fonction d'une règle prédéfinie pour générer la liste de PLMN.

10. Dispositif pour la sélection d'un PLMN selon la revendication 9, dans lequel la règle prédéfinie est : l'agencement de tous les PLMN disponibles par ordre de PLMN enregistré, RPLMN, PLMN de rattachement, HPLMN, PLMN contrôlé par l'utilisateur, UPLMN, et sélecteur de PLMN contrôlé par l'opérateur avec technologie d'accès, OPLMN.

11. Terminal pour la sélection d'un réseau mobile terrestre public, PLMN, **caractérisé en ce que** le terminal comprend le dispositif pour la sélection d'un PLMN selon l'une quelconque des revendications 6 à 10 ; le terminal pour la sélection d'un PLMN étant adapté pour utiliser le dispositif pour la sélection d'un PLMN pour rechercher, sélectionner et s'enregistrer sur un PLMN.
